# EUROPÄISCHE PATENTSCHRIFT

(11) **EP 3 684 604 B1**
(45) Veröffentlichungstag und Bekanntmachung des Hinweises auf die Patenterteilung: **24.11.2021**
(21) Anmeldenummer: 18769374.2
(22) Anmeldetag: 18.09.2018
(51) Int. Cl.: B29D 29/00, C08K 3/04, C08K 3/22, C08K 5/00, C08K 5/14, C08K 5/17, C08K 5/36, C08K 9/00, F16J 15/00, F16L 11/00

(54) **VULKANISIERBARE HNBR-ZUSAMMENSETZUNG MIT HOHER WÄRMELEITFÄHIGKEIT**
VULCANIZABLE HNBR COMPOSITION WITH HIGH THERMAL CONDUCTIVITY
COMPOSITION HNBR VULCANISABLE À HAUTE CONDUCTIVITÉ THERMIQUE

(30) Priorität: 20.09.2017 EP 17192107
(43) Veröffentlichungstag der Anmeldung: 29.07.2020
(73) Patentinhaber: ARLANXEO Deutschland GmbH, 41540 Dormagen (DE)
(72) Erfinder: KAISER, Andreas, 40468 Düsseldorf (DE); LIEBER, Susanna, 67663 Kaiserslautern (DE)
(86) Internationale Anmeldenummer: PCT/EP2018/075185
(87) Internationale Veröffentlichungsnummer: WO 2019/057703

(56) Entgegenhaltungen:
- EP-A1- 2 700 692
- DATABASE CA [Online] CHEMICAL ABSTRACTS SERVICE, COLUMBUS, OHIO, US; 30. März 2016 (2016-03-30), WU, YANFU: "High temperature-resistant and wear-resistant rubber material for oil sealing", XP002778712, gefunden im STN Database accession no. 2016:492525 -& CN 105 440 379 A (NINGGUO TIANYUN RUBBER & PLASTIC PRODUCTS CO LTD) 30. März 2016 (2016-03-30)
- DATABASE CA [Online] CHEMICAL ABSTRACTS SERVICE, COLUMBUS, OHIO, US; 8. Januar 2015 (2015-01-08), WEI, SHUYUAN: "Formula of rubber sealing material.", XP002778713, gefunden im STN Database accession no. 2015:37666 -& CN 104 262 724 A (QINGDAO HI TECH PATENT TECHNOLOGY TRANSFER PLATFORM CO LTD) 7. Januar 2015 (2015-01-07)

## Beschreibung

Die vorliegende Erfindung betrifft **vulkanisierbare Zusammensetzungen** enthaltend hydrierten Nitrilkautschuk, synthetischen Graphit und/oder Aluminiumoxid und ein Vernetzungsmittel, deren Vulkanisate, sowie deren Verwendung als Bauteil.

Bauteile auf Basis von hydriertem Nitrilkautschuk zeichnen sich neben der hohen Hitze- und Ölbeständigkeit durch eine geringe Wärmeleitfähigkeit aus. Typische Wärmeleitfähigkeiten von reinen Kautschuken liegen etwas im Bereich von 0,1 bis 0,5 W/m*K. Im **Bayer-Handbuch, 2.Ausgabe 1999**, S. 719 sind Werte für unterschiedliche Vulkanisate von 0,53 W/m*K (Vulkanisat auf Basis von hydriertem Nitrilkautschuk) bis hin zu 0,95 W/m*K (Vulkanisat auf Basis von chlorsulfoniertes Polyethylen) offenbart. Eine typisches HNBR-Vulkanisat besteht z. B. aus 30 phr bis 100 phr Ruß, 2 phr bis 4 phr Magnesiumoxid, einem Alterungsschutzmittel, sowie einem Vernetzungssystem bestehend aus einem Coagenz (1 phr bis 4 phr) sowie einem Peroxid (4 phr bis 12 phr). Solche Mischungen weisen nach Vullkanisation gute physikalische Eigenschaften auf, d. h. die Materialien weisen eine Bruchdehnung von bis zu 600 % und eine Zugfestigkeit bis zu 35 MPa auf. Typischerwiese liegt die Wärmeleitfähigkeit bei etwa 0,4 W/m*K.

Wärmeleitfähige Vulkanisate werden vermehrt für Bauteile mit Entwärmungsaufgaben eingesetzt und verdrängen zum Teil metallische Bauteile. Vulkanisate haben gegenüber metallischen Bauteilen den Vorteil, dass die Verarbeitung im Spritzgussverfahren mehr Freiheiten bei der Formgebung ermöglicht und die geringere Dichte Leichtbauweisen ermöglicht. In verschiedenen technischen Anwendungen wie beispielsweise der Elektronik, Mechatronik oder in technischen Teilen in der Automobilindustrie wird gleichzeitig elastisches Verhalten und eine hohe Wärmeleitfähigkeit von bis zu 5 W/m*K verlangt.

Nachdem die inhärente Wärmeleitfähigkeit von Kautschuken sehr gering ist, wird die Wärmeleitfähigkeit typischerweise durch ein Füllstoff- bzw. Additivsystem erhöht. Dabei dürfen jedoch die physikalischen Eigenschaften des Werkstoffes nicht zu stark beeinträchtigt werden.

Als wärmeleitfähige Füllstoffe zur Erhöhung der Wärmeleitfähigkeit in hydriertem Nitrilkautschuk sind beispielsweise metallische Füllstoffe (z.B. Kupfer), keramische Füllstoffe (z.B. Bornitrid (BN), Aluminiumoxid (Al₂O₃), Aluminiumnitrid (AIN) und Erdalkalioxide wie z.B. Magnesiumoxid (MgO)), Alumosilikate (SiO₂*Al₂O₃) oder organische Füllstoffe (Graphit, Kohlenstoff-Nanoröhrchen (carbon nanotubes, CNT)) bekannt.

So offenbart CN-A-104945702 HNBR-Zusammensetzungen mit einer Wärmeleitfähigkeit von 4 W/m*K. Die Füllstoff, der zur Erhöhung der Wärmeleitfähigkeit eingesetzt werden, sind **modifizierte Kohlenstoff-Nanoröhrchen**, **modifiziertes Graphen** und **Aluminiumnitrid.**

EP-A-2816083 offenbart in Anspruch 5 Bauteile aus einem Polymer-Bornitrid-Compound enthaltend hydrierten Nitrilkautschuk (HNBR) und **Bornitrid**-Agglomerate als wärmeleitenden Füllstoff, die eine Wärmeleitfähigkeit von wenigstens 1,5 W/m*K aufweisen.

US-A-20140/339780 offenbart Dichtungen aus HNBR und **Bornitrid**-Nanopartikeln, wobei die Dichtungen eine Wärmeleitfähigkeit von ungefähr 1 W/m*K bis ungefähr 3 W/m*K aufweisen.

Um HNBR-Vulkanisate mit Wärmeleitfähigkeiten von über 1 W/m*K zu erhalten müssen hohe Mengen an wärmeleitfähigem Füllstoff in HNBR eingemischt werden. Erhöhte Mengen von Bornitrid oder Kohlenstoff-Nanoröhrchen erschweren typischerweise die Verarbeitbarkeit der Kautschukzusammensetzung (bspw. durch eine deutliche Erhöhung des Compound-Mooneys) und verändern die physikalischen Eigenschaften stark, da es bspw. zu einem Abfall der Bruchdehnung, der Zugfestigkeit und des Weiterreißwiderstandes bzw. zu einem Anstieg der Härte kommen kann.

Als weiterer wärmeleitender Füllstoff ist außerdem **Graphit** bekannt. JP-A-2002-080639 offenbart Vulkanisate auf Basis von **HNBR** und 60 phr **Graphit** welche eine thermische Leitfähigkeit von 0,36 bis 0,6 W/m*K aufweisen.

Neben herkömmlichem Graphit sind auch **synthetische Graphite** bekannt, u.a. als Füller zur Verbesserung der elektrischen Leitfähigkeit und zum Herabsetzen des Reibbeiwertes von Kunststoffen.

US-A-2016/0082774 offenbart Dien-Kautschuk-Zusammensetzungen für Reifen enthaltend beispielsweise Nitrilkautschuk (NBR) mit verschiedenen wärmeleitfähigen Füllstoffen wie beispielsweise **exfolierte Graphite**, CNT, Acetylen-Ruß, BN, Al₂O₃, LiClO₄, ZnO und metallische Partikel wie Nickel, Kupfer, Aluminium oder Eisen, deren Vulkanisate eine Wärmeleitfähigkeit von zumindest 0,6 W/m*K aufweisen. Zusammensetzungen aus HNBR und synthetischem Graphit sind nicht beschrieben.

EP-A-2 700 692 offenbart hydrierte Nitrilkautschukzusammensetzungen mit Ruß und/oder weiteren Füllstoffen. Es können noch weitere Zusatzstoffe, wie Vernetzer eingesetzt werden. Ansprüche 1 und 4 offenbaren organische Peroxide als Vernetzer, sowie Graphit und Aluminiumoxid als Füllstoffe.

CN-A-105 440 379 offenbart hitzeresistente Gummizusammensetzungen für Dichtungen. Diese basieren auf hydriertem Nitrilkautschuk, Füllstoffen, Peroxiden und modifiziertem Graphit. Der modifizierte Graphit wird durch Behandlung mit Vinyltrimethoxysilan erhalten.

CN-A-104 262 724 offenbart Gummidichtungen aus hydriertem Nitrilkautschuk wobei ein peroxidischer Vernetzer und Aluminiumoxid darin verarbeitet wird.

WO-A-16120760 (Timrex C THERM+ thermoplastic Polymer) offenbart Zusammensetzungen enthaltend 20 bis 99 Gew.-% **thermoplastisches Polymer**, 0,5 bis 50 Gew.-% expandierbare Graphit-Plättchen mit einer Dicke von mehr als 1 Mikrometer und mehr als 0 bis 60 Gew.-% weiterer Additive. Die Zusammensetzung weist eine Wärmeleitfähigkeit von 1,0 bis 30 W/m*K auf. Als Füllstoff zur Verbesserung der Wärmeleitfähigkeit wird Graphit genannt, beispielsweise expanded/exfoliated Graphit wie TIMREX C-THERM^{®} die eine höhere Wärmeleitfähigkeit aufweisen als herkömmliche "flake like" Graphite.

Allen Dokumenten des Standes der Technik ist gemein, dass keine vulkanisierbaren Zusammensetzungen auf Basis von HNBR bekannt sind, die nach der Vernetzung Vulkanisate liefern, die eine **hohe Wärmeleitfähigkeit** und **zufriedenstellende physikalische und mechanische Eigenschaften** aufweisen.

Die **Aufgabe** der vorliegenden Erfindung war es somit, vulkanisierbare Zusammensetzungen auf Basis von HNBR bereitzustellen, deren Vulkanisate eine **Wärmeleitfähigkeit** von 2,0 W/m*K oder mehr, bevorzugt 3,0 W/m*K oder mehr, besonders bevorzugt 3,5 W/m*K oder mehr und ganz besonders bevorzugt 4,5 W/m*K oder mehr aufweisen.

In einer weiteren Aufgabe werden bevorzugt solche vulkanisierbaren Zusammensetzungen bereitgestellt, welche neben einer hohen Wäremleitfähigkeit auch eine eine gute **Verarbeitbarkeit**, d.h. einen Mooney-Wert ML 1+4 von **155 ME oder weniger** aufweisen.

In einer weiteren Aufgabe werden besonders bevorzugt solche vulkanisierbaren Zusammensetzungen bereitgestellt, die zu Vulkanisaten führen, die zusätzlich eine **Shore A Härte von von 100 ShA oder weniger** aufweisen, damit das Material ausreichend elastisch und nicht zu hart ist.

In einer weiteren Aufgabe werden besonders bevorzugt solche vulkanisierbaren Zusammensetzungen bereitgestellt, die **keine Blasenbildung beim Heizen** aufweisen, da sich durch Blasenbildung die Materialeigenschaften und die Verarbeitung verschlechtern. Das Problem macht sich insbesondere bei größeren Schichtdicken >5 mm bemerkbar. Bei Blasenbildung ist die Herstellung eines Gummiformartikels mit wohl definierter Geometrie nicht möglich.

Überraschenderweise wurde gefunden, dass vulkanisierbare Zusammensetzungen enthaltend hydrierten Nitrilkautschuk, synthetischen Graphit und/oder Aluminiumoxid (Al₂O₃) und Vernetzungsmittel zu Vulkanisaten mit hohen Wäremeleitfähigkeiten und zufriedenstellenden physikalischen und mechanischen Eigenschaften führen.

**Gegenstand der Erfindung** sind vulkanisierbare Zusammensetzungen, dadurch gekennzeichnet, dass sie
(a) 100 Gew.-Teile mindestens eines hydrierten Nitrilkautschuks,
(b) 150 bis 300 Gew.-Teile mindestens eines Aluminiumoxids und (c) mindestens ein Vernetzungmittel, bevorzugt eine Peroxidverbindung, ein aminisches Vernetzungsmittel oder ein schwefelhatiges Venetzungsmittel,
enthalten.

Diese Lösung war insofern überraschend, als nicht jeder wärmeleitende Füllstoff, der für eine Erhöhung der Wärmeleitfähigkeit bekannt war, in den vulkanisierbaren Zusammensetzungen mit hydriertem Nitrilkautschuk zu Vulkanisaten mit hohen Wärmeleitfähigkeiten von 2,0 W/m*K oder mehr führt unter Beibehaltung zufriedenstellender physikalischen und mechanischen Eigenschaften wie Härte, Mooney-Viskosität und Verarbeitbarkeit.

**Bevorzugt** sind vulkanisierbare Zusammensetzungen, dadurch gekennzeichnet, dass sie
(a) 100 Gew.-Teile hydrierten Nitrilkautschuk,
(b) mehr als 20 bis 100 Gew.-Teile mindestens eines synthetischem Graphits, bevorzugt "TIMREX^{®} C-THERM 001" und
   150 bis 300 Gew.-Teile eines Aluminiumoxids, bevorzugt Martoxid^{®} TM-2410 oder Martoxid^{®} TM-1410,
(c) 1 bis 20 Gew.-Teile, bevorzugt 2 bis 10 Gew.-Teile mindestens eines Vernetzungsmittels, bevorzugt einer Peroxidverbindung,
(d) 0 bis 100 Gew.-Teile, bevorzugt 1 bis 80 Gew.-Teile eines oder mehrerer üblicher Kautschukadditive, bevorzugt eines oder mehrerer Füllstoffe, insbesondere Ruß, Kieselsäure, Magnesiumoxid, eines oder mehrerer Füllstoffaktivatoren, insbesondere auf Basis eines organischen Silans, eines oder mehrerer Alterungsschutzmittel, insbesondere oligomerisiertes 2,2,4-Trimethyl-1,2-dihydro-chinolin (TMQ), styrolisiertes Diphenylamin (DDA), octyliertes Diphenylamin (OCD), cumyliertes Diphenylamin (CDPA) oder Zinksalz von 4- und 5-Methylmercaptobenzimidazol (Vulkanox ZMB2) oder 4- und 5-Methylmercaptobenzimidazol und/oder eines oder mehrerer Formtrennmittel oder Verarbeitungshilfsmittel bezogen auf 100 Gew.-Teile der hydrierten Nitrilkautschuks (a), enthalten.

Offenbart sind vulkanisierbare Zusammensetzungen, dadurch gekennzeichnet, dass sie
(a) 100 Gew.-Teile eines hydrierten Nitrilkautschuks,
(b) 20 bis 100 Gew.-Teile eines synthetischen Graphits mit einem D₉₀-Wert gemäß DIN 51938 von 70 µm oder mehr, bevorzugt 80 µm oder mehr und besonders bevorzugt 81 µm wie **"TIMREX^{®} C-THERM 001"**,
(c) 1 bis 20 Gew.-Teile, bevorzugt 2 bis 10 Gew.-Teile mindestens einer Peroxidverbindung,
(d) 0 bis 100 Gew.-Teile, bevorzugt 1 bis 80 Gew.-Teile eines oder mehrerer üblicher Kautschukadditive, bevorzugt eines oder mehrerer Füllstoffe, insbesondere Ruß, Kieselsäure, Magnesiumoxid, eines oder mehrerer Füllstoffaktivatoren, insbesondere auf Basis eines organischen Silans, eines oder mehrerer Alterungsschutzmittel, insbesondere oligomerisiertes 2,2,4-Trimethyl-1,2-dihydro-chinolin (TMQ), styrolisiertes Diphenylamin (DDA), octyliertes Diphenylamin (OCD), cumyliertes Diphenylamin (CDPA) oder Zinksalz von 4- und 5-Methylmercaptobenzimidazol (Vulkanox ZMB2) oder 4- und 5-Methylmercaptobenzimidazol und/oder eines oder mehrerer Formtrennmittel oder Verarbeitungshilfsmittel bezogen auf 100 Gew.-Teile des hydrierten Nitrilkautschuks (a)
enthalten.

**In einer alternativen Ausführungsform sind besonders bevorzugt** vulkanisierbare Zusammensetzungen, dadurch gekennzeichnet, dass sie
(a) 100 Gew.-Teile eines hydrierten Nitrilkautschuks,
(b) 150 bis 300 Gew.-Teile, besonders bevorzugt 150 bis 270 Gew.-Teile eines **Aluminiumoxids**,
(c) 1 bis 20 Gew.-Teile, bevorzugt 2 bis 10 Gew.-Teile mindestens einer Peroxidverbindung,
(d) 0 bis 100 Gew.-Teile, bevorzugt 1 bis 80 Gew.-Teile eines oder mehrerer üblicher Kautschukadditive, bevorzugt eines oder mehrerer Füllstoffe, insbesondere Ruß, Kieselsäure, Magnesiumoxid, eines oder mehrerer Füllstoffaktivatoren, insbesondere auf Basis eines organischen Silans, eines oder mehrerer Alterungsschutzmittel, insbesondere oligomerisiertes 2,2,4-Trimethyl-1,2-dihydro-chinolin (TMQ), styrolisiertes Diphenylamin (DDA), octyliertes Diphenylamin (OCD), cumyliertes Diphenylamin (CDPA) oder Zinksalz von 4- und 5-Methylmercaptobenzimidazol (Vulkanox ZMB2) oder 4- und 5-Methylmercaptobenzimidazol und/oder eines oder mehrerer Formtrennmittel oder Verarbeitungshilfsmittel bezogen auf 100 Gew.-Teile des hydrierten Nitrilkautschuks (a)
enthalten.

Als **Komponente (a)** wird hydrierter Nitrilkautschuk eingesetzt.

Hydrierte Nitrilkautschuke (a) sind kommerziell erhältlich, aber ferner in allen Fällen nach dem Fachmann über die Literatur zugänglichen Herstellverfahren zugänglich.

Unter **hydrierten Nitrilkautschuken** (HNBR) sind im Rahmen dieser Anmeldung Co- und/oder Terpolymere, enthaltend mindestens ein konjugiertes Dien und mindestens ein α,β-ungesättigtes Nitrilmonomer sowie gegebenenfalls weitere copolymerisierbarere Monomere, zu verstehen, bei denen die einpolymerisierten Dieneinheiten ganz oder teilweise hydriert sind.

Unter "Hydrierung" oder "hydriert" wird im Rahmen dieser Anmeldung eine Umsetzung der im Nitrilkautschuk ursprünglich vorhandenen Doppelbindungen zu mindestens 50 %, bevorzugt mindestens 85 %, besonders bevorzugt mindestens 95 % verstanden.

Als **α,β-ungesättigtes Nitril** kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Das **konjugierte Dien** kann von jeder Natur sein. Bevorzugt werden (C₄-C₆) konjugierte Diene eingesetzt. Besonders bevorzugt sind 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Die Anteile an konjugiertem Dien und α,β-ungesättigtem Nitril in den hydrierten Nitrilkautschuken können in weiten Bereichen variiert werden. Der Anteil des oder der Summe der konjugierten Diene liegt üblicherweise im Bereich von 40 bis 90 Gew.-% und bevorzugt im Bereich von 50 bis 80 Gew.-%, bezogen auf das Gesamtpolymer. Der Anteil des oder der Summe der α,β-ungesättigten Nitrile liegt üblicherweise im Bereich von 10 bis 60 Gew.-% und bevorzugt im Bereich von 20 bis 50 Gew.-%, bezogen auf das Gesamtpolymer. Die zusätzlichen Monomere können in Mengen im Bereich von 0,1 bis 40 Gew.-%, bevorzugt im Bereich von 1 bis 30 Gew.-%, bezogen auf das Gesamtpolymer, vorliegen. In diesem Fall werden entsprechende Anteile des oder der konjugierten Diene und/oder des oder der α,β-ungesättigten Nitrile durch die Anteile der zusätzlichen Monomere ersetzt, wobei sich die Anteile aller Monomere jeweils zu 100 Gew.-% aufsummieren.

Die Herstellung solcher hydrierter Nitrilkautschuke, die für die erfindungsgemäßen vulkanisierbaren Zusammensetzungen geeignet sind, ist dem Fachmann hinlänglich geläufig.

Die zunächst erfolgende Herstellung der Nitrilkautschuke durch Polymerisation der vorgenannten Monomere ist in der Literatur (z.B. Houben-Weyl, Methoden der Organischen Chemie Bd.14/1, Georg Thieme Verlag Stuttgart 1961) umfangreich beschrieben.

Die anschließende Hydrierung der vorstehend beschriebenen Nitrilkautschuke zu hydriertem Nitrilkautschuk kann in der dem Fachmann bekannten Art und Weise erfolgen.

Es ist prinzipiell möglich, die Hydrierung von Nitrilkautschuken unter Einsatz homogener oder heterogener Hydrierkatalysatoren durchzuführen.

Wie in WO-A-01/77185 beschrieben, ist es beispielsweise möglich, die Umsetzung mit Wasserstoff unter Einsatz homogener Katalysatoren, wie z.B. dem als "Wilkinson"-Katalysator ((PPh₃)₃RhCl) bekannten oder anderen durchzuführen. Verfahren zur Hydrierung von Nitrilkautschuk sind bekannt. Rhodium oder Titan werden üblicherweise als Katalysatoren verwendet, wobei aber auch Platin, Iridium, Palladium, Rhenium, Ruthenium, Osmium, Kobalt oder Kupfer entweder als Metall, oder aber bevorzugt in Form von Metallverbindungen eingesetzt werden können (siehe z.B. US-A-3,700,637**,** DE-A-25 39 132**,** EP-A-134 023**,** DE-OS-35 41 689**,** DE-OS-35 40 918**,** EP-A-298 386**,** DE-OS-35 29 252**,** DE-OS-34 33 392**,** US-A-4,464,515 **und** US-A-4,503,196).

Geeignete Katalysatoren und Lösungsmittel für eine Hydrierung in homogener Phase werden im Folgenden beschrieben und sind auch aus DE-A-25 39 132 und der EP-A-0 471 250 bekannt

Die selektive Hydrierung kann beispielsweise in Gegenwart eines Rhodium-haltigen Katalysators erreicht werden. Einsetzbar ist beispielsweise ein Katalysator der allgemeinen Formel

(R¹ₘB)ₗ RhXₙ

worin
- R¹: gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen,
- B: Phosphor, Arsen, Schwefel oder eine Sulfoxid-Gruppe S=O bedeutet,
- X: Wasserstoff oder ein Anion, vorzugsweise Halogen und besonders bevorzugt Chlor oder Brom, bedeutet
- l: 2,3 oder 4 ist
- m: 2 oder 3 ist und
- n: 1,2 oder 3, bevorzugt 1 oder 3 ist.

Bevorzugte Katalysatoren sind Tris(triphenylphosphin)-rhodium(I)-chlorid, Tris(triphenyl-phosphin)-rhodium(III)-chlorid und Tris(dimethylsulfoxid)-rhodium(III)-chlorid sowie Tetrakis- (triphenylphosphin)-rhodium-hydrid der Formel ((C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01 bis 1 Gew.-%, bevorzugt im Bereich von 0,03 bis 0,5 Gew.-% und besonders bevorzugt im Bereich von 0,1 bis 0,3 Gew.-% bezogen auf das Gewicht des Polymers sind geeignet.

Üblicherweise ist es sinnvoll, den Katalysator zusammen mit einem Co-Katalysator zu verwenden, der ein Ligand der Formel R¹ₘB ist, wobei R¹ m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl-, Tricycloalkyl-, Triaryl-, Triaralkyl-, Diarylmonoalkyl-, Diarylmonocycloalkyl-, Dialkylmonoaryl-, Dialkyl-monocycloalkyl-, Dicycloalkylmonoaryl- oder Dicyclalkylmonoaryl-Resten.

Beispiele für Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3 bis 5 Gew.-%, besonders bevorzugt im Bereich von 0,5 bis 4 Gew.-%, bezogen auf das Gewicht des zu hydrierenden Nitrilkautschuks eingesetzt. Bevorzugt ist ferner das Gewichtsverhältnis des Rhodium-haltigen Katalysators zum Co-Katalysator im Bereich von 1:3 bis 1:55, besonders bevorzugt im Bereich von 1:5 bis 1:45. Bezogen auf 100 Gewichtsteile des zu hydrierenden Nitrilkautschuks werden geeigneter Weise 0,1 bis 33 Gewichtsteile des Co-Katalysators, bevorzugt 0,5 bis 20 und ganz besonders bevorzugt 1 bis 5 Gewichtsteile, insbesondere mehr als 2 aber weniger als 5 Gewichtsteile Co-Katalysators bezogen auf 100 Gewichtsteile des zu hydrierenden Nitrilkautschuks eingesetzt.

Die praktische Durchführung solcher Hydrierungen ist dem Fachmann z.B. aus US-A-6,683,136 hinlänglich bekannt. Sie erfolgt üblicherweise, indem man den zu hydrierenden Nitrilkautschuk in einem Lösungsmittel wie Toluol oder Monochlorbenzol bei einer Temperatur im Bereich von 100 °C bis 150 °C und einem Druck im Bereich von 50 bar bis 150 bar für 2 Stunden bis 10 Stunden mit Wasserstoff beaufschlagt.

Bei Einsatz heterogener Katalysatoren zur Herstellung hydrierter Nitrilkautschuke durch Hydrierung der entsprechenden Nitrilkautschuke handelt es sich üblicherweise um geträgerte Katalysatoren auf der Basis von Palladium.

Die Mooney-Viskosität (ML 1+4 gemessen bei 100°C) des eingesetzten hydrierten Nitrilkautschuks (a) oder, sofern noch weitere Kautschuke eingesetzt werden, der gesamten Mischung aller Kautschuke (a) liegt in einem Bereich von 10 bis 120, bevorzugt in einem Bereich von 20 bis 110, besonders bevorzugt in einem Bereich von 30 bis 100. Die Bestimmung der Mooney-Viskosität erfolgt dabei gemäß ASTM Norm D 1646.

Der erfindungsgemäße hydrierte Nitrilkautschuk weist einen **Gehalt an Restdoppelbindungen (RDB)** von 10 % oder weniger, bevorzugt von 7 % oder weniger, besonders bevorzugt von 1 % oder weniger auf.

Die in der erfindungsgemäßen vulkanisierbaren Zusammensetzung einsetzbaren hydrierten Nitrilkautschuke besitzen eine **Glastemperatur** kleiner -10 °C, bevorzugt kleiner -15 °C, besonders bevorzugt kleiner -20 °C gemessen über DSC bei einer Heizrate von 20 K/min.

Beispiele für kommerziell erhältliche hydrierte Nitrilkautschuke sind voll- und teilhydrierte Nitrilkautschuke mit Acrylnitrilgehalten im Bereich 17 bis 50 Gew.-% (Therban^{®}-Palette der ARLANXEO Deutschland GmbH sowie Zetpol^{®}-Palette der Nippon Zeon Corporation). Ein Beispiel für hydrierte Butadien/Acrylnitril/AcrylatPolymere ist die Therban^{®} LT-Serie der ARLANXEO Deutschland GmbH, beispielsweise Therban^{®} LT 2157 sowie Therban^{®} LT 2007. Ein Beispiel für carboxylierte hydrierte Nitrilkautschuke ist die Therban^{®} XT-Serie der ARLANXEO Deutschland GmbH. Ein Beispiel für hydrierte Nitrilkautschuke mit geringen Mooney-Viskositäten und daher verbesserter Verarbeitbarkeit ist ein Produkt aus der Therban^{®} AT-Serie, beispielweise Therban^{®} AT 3404.

Der **hydrierte Nitrilkautschuk** kann neben Wiederholungseinheiten mindestens eines ungesättigten Nitrils und mindestens eines konjugierten Diens ein oder mehrere weitere einpolymerisierbare Monomere in Form von **Carbonsäuren** oder **Carbonsäureester** enthalten.

Geeignete einpolymerisierbare Carbonsäuren sind Mono- oder Dicarbonsäuren mit 3 bis 18 C-Atomen, die in α,β-Position ungesättigt sind, und deren Ester. Bevorzugte α,β-ungesättigte Carbonsäuren sind Acrylsäure, Methacrylsäure, Itaconsäure, Fumarsäure, Maleinsäure, Crotonsäure und Mischungen davon.

Ester der α,β-ungesättigten Carbonsäuren mit 3 bis 18 C-Atomen umfassen vorzugsweise die Alkylester und die Alkoxyalkylester der zuvor genannten Carbonsäuren. Bevorzugte Ester der α,β-ungesättigten Carbonsäuren mit 3 bis 18 C-Atomen sind Methylacrylat, Ethylacrylat, Butylacrylat, 2-Ethylhexylacrylat, Octylacrylat und Polyethylenglycol-(Meth)acrylat (PEG-(Meth)acrylat) mit 1 bis 12 Ethylenglycol-Wiederholungseinheiten. Bevorzugte Alkoxyalkylester sind Polyethylenglycol-(Meth)acrylat (PEG-(Meth)acrylat) mit 1 bis 8 Ethylenglycol-Wiederholungseinheiten und Butylacrylate.

Bevorzugte Ester der α,β-ethylenisch ungesättigte Dicarbonsäure Monoester sind beispielsweise
o Alkyl-, insbesondere C₄-C₁₈-Alkyl-, bevorzugt n-Butyl-, tert.-Butyl-, n-Pentyl- oder n-Hexyl-, besonders bevorzugt Mono-n-butylmaleat, Mono-n-butylfumarat, Mono-n-butylcitraconat, Mono-n-butylitaconat;
o Alkoxyalkyl-, insbesondere C₁-C₁₈-Alkoxyalkyl-, bevorzugt C₄-C₁₂-Alkoxyalkyl-,
o Polyethylenglycolester (PEG) mit 1 bis 8 Ethylenglycol-Wiederholungseinheiten
o Hydroxyalkyl-, insbesondere C₄-C₁₈-Hydroxyalkyl-, bevorzugt C₄-C₁₂-Hydroxyalkyl-,
o Cycloalkyl-, insbesondere C₅-C₁₈-Cycloalkyl-, bevorzugt C₆-C₁₂-Cycloalkyl, besonders bevorzugt Monocyclopentylmaleat, Monocyclohexylmaleat, Monocycloheptylmaleat, Monocyclopentylfumarat, Monocyclohexylfumarat, Monocycloheptylfumarat, Monocyclopentylcitraconat, Monocyclohexylcitraconat, Monocycloheptylcitraconat, Monocyclopentylitaconat, Monocyclohexylitaconat und Monocycloheptylitaconat,
o Alkylcycloalkyl-, insbesondere C₆-C₁₂-Alkylcycloalkyl-, bevorzugt C₇-C₁₀-Alkylcycloalkyl, besonders bevorzugt Monomethylcyclopentylmaleat und Monoethylcyclohexylmaleat, Monomethylcyclopentylfumarat und Monoethylcyclohexylfumarat, Monomethylcyclopentylcitraconat und Monoethylcyclohexylcitraconat; Monomethylcyclopentylitaconat und Monoethylcyclohexyl itaconat;
o Aryl-, insbesondere C₆-C₁₄-Aryl-Monoester, bevorzugt Maleinsäuremonoarylester, Fumarsäuremonoarylester, Citraconsäuremonoarylester oder Itaconsäuremonoarylester, besonders bevorzugt Monophenylmaleat oder Monobenzylmaleat, Monophenylfumarat oder Monobenzylfumarat, Monophenylcitraconat oder Monobenzylcitraconat, Monophenylitaconat oder Monobenzylitaconat oder Mischungen davon,
o ungesättigte Polycarboxylsäurepolyalkylester wie beispielsweise Dimethylmaleat, Dimethylfumarat, Dimethylitaconate oder Diethylitaconate; oder
o aminogruppenhaltige α,β-ethylenisch ungesättigte Carboxylsäureester wie beispielsweise Dimethylaminomethylacrylat oder Diethylaminoethylacrylat.

Der **hydrierte Nitrilkautschuk** enthält in einer bevorzugten Ausführungsform neben Wiederholungseinheiten mindestens eines ungesättigten Nitrils und mindestens eines konjugierten Diens zusätzlich Alkylester von α,β-ethylenisch ungesättigten Carbonsäuren und Polyethylenglycolcarbonsäureester mit 1 bis 12 Ethylenglycol-Wiederholungseinheiten.

### Komponente (b) - Wärmeleitfähiger Füllstoff

Die erfindungsgemäße vulkanisierbare Zusammensetzung enthält als Komponente (b) mindestens einen wärmeleitfähigen Füllstoff ausgewählt aus der Gruppe bestehend aus synthetischem Graphit oder Aluminiumoxid.

Synthetischer Graphit ist auch als Acheson-Graphit bekannt, der in elektrischen Öfen durch das Erhitzen von Koks in Gegenwart von Silicium hergestellt wird. Synthetischer Graphit ist kommerziell erhältlich unter anderm bei SGL Carbon, Schunk Kohlenstofftechnik, Imerys und Morgan Advanced Materials.

Synthetische Graphite werden in Form von Fasern, Stäbchen, Kugeln, Hohlkugeln, Plättchen, in Pulverform, jeweils sowohl in aggregierter als auch in agglomerierter Form, in den erfindungsgemäßen vulkanisierbaren Zusammensetzungen verwendet. Unter der plättchenförmigen Struktur wird in der vorliegenden Erfindung ein Partikel verstanden, der eine flache Geometrie aufweist. So ist die Höhe der Partikel üblicherweise deutlich geringer im Vergleich zu der Breite oder Länge der Partikel. Die Längendimensionen der Partikel können durch Standardmethoden, zum Beispiel die Elektronenmikroskopie, ermittelt werden.

**Kommerziell verfügbare synthetische Graphite** sind beispielsweise TIMREX^{®} KS5-44, TIMREX^{®} KS6, TIMREX^{®} KS150, TIMREX^{®} SFG44, TIMREX^{®} SFG150, TIMREX^{®} C-THERM™ 001 und TIMREX^{®} C-THERM™ 011, C-Therm 012 von der Firma Imerys.

Bevorzugte synthetische Graphite (b) sind solche mit einem **D₉₀-Wert** gemäß DIN 51938 von 70 µm oder mehr, bevorzugt 80 µm oder mehr, besonders bevorzugt 81 µm.

Bevorzugte synthetische Graphite (b) weisen einen **Aschegehalt** gemäß ASTM C561-16 von <0,5 %, bevorzugt <0,3 % auf.

Bevorzugte synthethische Graphite (b) weisen eine **Dichte** (Scott-Density gemessen als Bulk Density mittels Scott Volumeter) von 0,01 bis 1 g/cm³, bevorzugt von 0,1 bis 0,2 g/cm³ auf.

Ein bevorzugter synthetischer Graphit ist **TIMREX^{®} C-Therm 001,** welcher kommerziell erhältlich bei der Firma Imerys ist. Synthetische Graphite der C-THERM Linie weisen ein hohes Aspektverhältnis auf. TIMREX^{®} C-Therm 001 weist einen D₉₀-Wert gemäß DIN 51938 von 81 µm, einen Aschegehalt gemäß ASTM C561-16 von <0,3 % und eine Dichte (bulk density) von 0,15 g/cm³ auf.

Sofern synthetischer Graphit eingesetzt wird, enthalten die erfindungsgemäßen Zusammensetzungen mehr als 20 bis 100 Gew.-Teile, besonders bevorzugt 40 bis 100 Gew.-Teile und ganz besonders bevorzugt 80 bis 120 Gew.-Teile mindestens eines synthetischen Graphites (b), bezogen auf 100 Gew.-Teile der hydrierten Nitrilkautschuke (a).

In einer alternativen Ausführungsform wird anstelle von synthethischem Graphit **Aluminiumoxid** (Al₂O₃) in den vulkanisierbaren Zusammensetzungen eingesetzt.

Bevorzugtes Aluminiumoxid ist dadurch gekennzeichnet, dass es eine Reinheit von >95%, einen BET-Gehalt von 0,8 bis 1,6 m²/g (gemessen nach DIN ISO 9277:2003-05) und eine Rütteldichte von 1 bis 3 g/cm³ aufweist.

Das eingesetzte Aluminiumoxid ist dadurch gekennzeichnet, dass es beschichtet oder unbeschichtet, bevorzugt beschichtet, besonders bevorzugt mit Alkylsilan beschichtet ist.

Ein besonders bevorzugtes alkylsilanbeschichtetes Aluminiumoxid ist **Martoxid^{®} TM-2410**; Reinheit > 99%, BET = 1,2 m²/g, Rütteldichte = 1,8 g/cm³; CAS-Nummer: 1344-28-1 (kommerziell erhältlich bei Martinswerk (Huber)).

Sofern Aluminiumoxid eingesetzt wird enthalten die erfindungsgemäßen Zusammensetzungen 150 bis 300 Gew.-Teile, besonders bevorzugt 150 bis 270 Gew.Teile mindestens eines Aluminiumoxids, bezogen auf 100 Gew.-Teile der hydrierten Nitrilkautschuke (a).

### Komponente (c) - Vernetzungsmittel

Als Vernetzungsmittel kommen beispielsweise peroxidische Vernetzer, schwefelhaltige Vernetzer oder aminische Vernetzer in Frage, wobei peroxidische Vernetzer bevorzugt sind.

Als **Komponente (c)** wird bevorzugt mindestens eine Peroxidverbindung als Vernetzungsmittel eingesetzt.

Als Peroxidverbindung (c) sind beispielsweise die folgenden **Peroxidverbindungen** geeignet:
Bis-(2,4-dichlorbenzoyl)-peroxid, Dibenzoylperoxid, Bis-(4-chlorbenzoyl)peroxid, 1,1-Bis-(tert-butylperoxy)-3,3,5-trimethylcyclohexan, tert-Butylperbenzoat, 2,2-Bis-(tert-butylperoxy)-buten, 4,4-Di-tert-butylperoxynonylvalerat, Dicumylperoxid, 2,5-Dimethyl-2,5-di-(tert-butylperoxy)-hexan, tert-Butylcumylperoxid, 1,3-Bis-(tert-butylperoxyisopropyl)-benzol, Di-tert-butylperoxid, 2,5-Dimethyl-2,5-di(tert-butylperoxy)-hexin, tert-Butylhydroperoxid, Wasserstoffperoxid, Methylethylketonperoxid, Lauroylperoxid, Decanoylperoxid, 3,5,5-Trimethyl-hexanoylperoxid, Di-(2-ethylhexyl)-peroxydicarbonat, Poly(tert-butyl peroxycarbonat), Ethyl-3,3-di-(tert-butylperoxy)-butyrat, Ethyl-3,3-di-(tert-amylperoxy)-butyrat, n-Butyl-4,4-di-(tert-butylperoxy)-valerat, 2,2-Di-(tert-butylperoxy)-butan, 1,1-Di-(tert-butylperoxy)-cyclohexan, 3,3,5-Tri-methylcyclohexan, 1,1-Di-(tert-amylperoxy)cyclohexan, tert-Butyl-peroxybenzoat, tert-Butyl-peroxyacetat, tert-Butyl-peroxy-3,5,5-trimethylhexanoat, tert-Butyl peroxyisobutyrat, tert-Butyl-peroxy-2-ethylhexanoat, tert-Butyl-peroxypivalat, tert-Amyl-peroxypivalat, tert-Butyl-peroxyneodecanoat, Cumylperoxyneodecanoat, 3-Hydroxy-1,1-di-methylbutyl-peroxyneodecanoat, tert-Butylperoxybenzoat, tert-Butyl-peroxyacetat, tert-Amyl-peroxy-3,5,5-trimethylhexanoat, tert-Butyl-peroxyisobutyrat, tert-Butyl-peroxy-2-ethylhexanoat, Cumylperoxyneodecanoat, 3-Hydroxy-1,1-di-methylbutyl-peroxy-neodecanoat, 2,5-Dimethyl-2,5-di-(tert-butyl-peroxy)-hexyn-(3-di-tert-amyl)-peroxid, 2,5-Dimethyl-2,5-di-(tert-butylperoxy)-hexan, tert-Amyl-hydroperoxid, Cumolhydroperoxid, 2,5-Dimethyl-2,5-di-(hydroperoxy)-hexan, Diisopropylbenzol-monohydroperoxid sowie Kaliumperoxodisulfat.

Die mindestens eine Peroxidverbindung der erfindungsgemäßen vulkanisierbaren Zusammensetzung ist vorzugsweise ein organisches Peroxid, insbesondere Dicumylperoxid, tert-Butylcumylperoxid, Bis-(tert-butyl-peroxy-isopropyl)benzol, Di-tert-butylperoxid, 2,5-Dimethylhexan-2,5-dihydroperoxid, 2,5-Dimethylhexin-3,2,5-dihydroperoxid, Dibenzoylperoxid, Bis-(2,4-dichlorobenzoyl)peroxid, tert-Butylperbenzoat, 4,4-Di(tert-butylperoxy)valeriansäurebutylester und/oder 1,1-Bis(tert-butylperoxy)-3,3,5-trimethylcyclohexan bedeutet.

Geeignete **schwefelhaltige und aminische Vernetzer** sind dem Fachmann bekannt.

Als schwefelhaltige Vernetzer können beispielsweise Schwefel in elementarer löslicher oder unlöslicher Form oder Schwefelspender eingesetzt werden.

Als Schwefelspender kommen beispielsweise Dimorpholyldisulfid (DTDM), 2-Morpholino-dithiobenzothiazol (MBSS), Caprolactamdisulfid, Dipentamethylenthiuramtetrasulfid (DPTT) und Tetramethylthiuramdisulfid (TMTD) in Frage.

Auch bei der Schwefelvulkanisation des erfindungsgemäßen hydrierten Nitril-Dien-Carbonsäureester-Copolymers ist es möglich, weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Umgekehrt kann die Vernetzung der erfindungsgemäßen hydrierten Nitril-Dien-Carbonsäureester-Copolymere aber auch nur in Gegenwart der oben genannten Zusätze erfolgen, d.h. ohne Zusatz von elementarem Schwefel oder Schwefelspendern.

Als Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als Dithiocarbamate können beispielsweise eingesetzt werden: Ammoniumdimethyldithiocarbamat, Natriumdiethyldithiocarbamat (SDEC), Natriumdibutyldithiocarbamat (SDBC), Zinkdimethyldithiocarbamat (ZDMC), Zinkdiethyldithiocarbamat (ZDEC), Zinkdibutyldithio-carbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithiocarbamat, Nickeldibutyldithio-carbamat, Nickeldimethyldithiocarbamat und Zinkdiisononyldithiocarbamat. Als Thiurame können zum Beispiel eingesetzt werden: Tetramethylthiuramdisulfid (TMTD), Tetramethylthiurammonosulfid (TMTM), Dimethyldiphenylthiuramdisulfid, Tetrabenzylthiuram-disulfid, Dipentamethylenthiuramtetrasulfid und Tetraethylthiuramdisulfid (TETD). Als Thiazole können zum Beispiel eingesetzt werden: 2-Mercaptobenzothiazol (MBT), Dibenzthiazyldisulfid (MBTS), Zinkmercaptobenzothiazol (ZMBT) und Kupfer-2-mercaptobenzothiazol. Als Sulfenamidderivate können zum Beispiel eingesetzt werden: N-Cyclohexyl-2-benzothiazylsulfenamid (CBS), N-tert.-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylen-thiocarbamyl-N-tert.butylsulfenamid und Oxydiethylenthiocarbamyl-N-oxyethylensulfenamid. Als Xanthogenate können zum Beispiel eingesetzt werden: Natriumdibutylxanthogenat, Zinkisopropyldibutylxanthogenat und Zinkdibutylxanthogenat. Als Guanidinderivate können zum Beispiel eingesetzt werden: Diphenylguanidin (DPG), Di-o-tolylguanidin (DOTG) und o-Tolylbiguanid (OTBG). Als Dithiophosphate können beispielsweise eingesetzt werden: Zinkdialkydithiophosphate (Kettenlänge der Alkylreste C2 bis C16), Kupferdialkyldithiophosphate (Kettenlänge der Alkylreste C2 bis C16) und Dithiophoshorylpolysulfid. Als Caprolactam kann beispielsweise Dithio-biscaprolactam eingesetzt werden. Als Thioharnstoffderivate können beispielsweise N,N'-Diphenylthioharnstoff (DPTU), Diethylthioharnstoff (DETU) und Ethylenthioharnstoff (ETU) eingesetzt werden. Ebenso als Zusätze geeignet sind beispielsweise: Zinkdiamindiisocyanat, Hexamethylentetramin, 1,3-Bis(citraconimidomethyl)benzol sowie zyklische Disulfane.

Die genannten Zusätze als auch die Vernetzungsmittel können sowohl einzeln als auch in Mischungen eingesetzt werden. Bevorzugt werden folgende Substanzen für die Vernetzung der hydrierten Nitril-Dien-Carbonsäureester-Copolymere eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkydithiophosphat, Dimorpholyldisulfid, Tellurdiethyldithiocarbamat, Nickeldibutyl-dithiocarbamat, Zinkdibutyldithiocarbamat, Zinkdimethyldithiocarbamat und Dithiobis-caprolactam.

Es kann vorteilhaft sein, neben diesen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyltrimellithat, Ethylenglycoldimethacrylat, Butandioldimethacrylat, Zinkdiacrylat, Zinkdimethacrylat, 1,2-Polybutadien oder N,N'-m-Phenylenbismaleinimid geeignet.

Die Menge an Vernetzungsmitel (c) beträgt in den erfindungsgemäßen vulkanisierbaren Zusammensetzungen typischerweise **1 bis 20 Gew.-Teile**, bevorzugt **2 bis 10 Gew.-Teile**, bezogen auf 100 Gew.-Teile der Kautschuke (a).

Darüber hinaus kann die vulkanisierbare Zusammensetzung weitere **Kautschukadditive (d)** enthalten. Übliche Kautschukadditive schließen beispielsweise ein: Polymere, die nicht unter die erfindungsgemäße Definition der Komponente (a) fallen, Ruß, weiße Füllstoffe, Kieselsäure, Magnesiumoxid, Graphen, Kohlenstoffnanoröhren (CNT), Füllstoffaktivatoren, Öle, insbesondere Verarbeitungsöle oder Extenderöle, Weichmacher, Verarbeitungshilfsmittel, Beschleuniger, multifunktionelle Vernetzer, Alterungsschutzmittel, Ozonschutzmittel, Antioxidationsmittel, Formtrennmittel, Retarder, weitere Stabilisatoren und Antioxidantien, Wollastonit, Farbstoffe, Fasern umfassend organische und anorganische Fasern sowie Faserpulpe, Vulkanisationsaktivatoren, und zusätzliche polymerisierbare Monomere, Dimere, Trimere oder Oligomere.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyltrimethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin oder Ethylenglycole mit Molekulargewichten von 74 bis 10.000 g/mol dar. Die Menge an Füllstoffaktivatoren beträgt üblicherweise 0,5 bis 10 Gew.-Teile, bezogen auf 100 Gew.-Teile der hydrierten Nitrilkautschuke (a).

Als **Alterungsschutzmittel** kommen insbesondere solche in Frage, die bei der peroxidischen Vulkanisation möglichst wenig Radikale abfangen. Dies sind insbesondere oligomerisiertes 2,2,4-Trimethyl-1,2-dihydro-chinolin (TMQ), styrolisiertes Diphenylamin (DDA), octyliertes Diphenylamin (OCD) cumyliertes Diphenylamin (CDPA), 4- und 5-Methylmercaptobenzimidazol (MB2) oder Zinksalz von 4- und 5-Methylmercaptobenzimidazol (ZMB2). Daneben können auch die bekannten phenolischen Alterungsschutzmittel eingesetzt werden, wie sterisch gehinderte Phenole bzw. Alterungsschutzmittel auf Basis von Phenylendiamin. Es können auch Kombinationen der genannten Alterungsschutzmittel eingesetzt werden, bevorzugt CDPA in Kombination mit ZMB2 oder MB2, besonders bevorzugt CDPA mit MB2. Ganz besonders bevorzugt ist reines CDPA.

Die **Alterungsschutzmittel** werden üblicherweise in Mengen von 0,1 bis 5 Gew.-Teile, bevorzugt von 0,3 bis 3 Gew.-Teile, bezogen auf 100 Gew.-Teile der hydrierten Nitrilkautschuke (a) eingesetzt.

Als **Formtrennmittel** kommen beispielsweise in Betracht: Gesättigte oder teilweise ungesättigte Fett- und Ölsäuren oder deren Derivate (in Form von Fettsäureestern, Fettsäuresalzen, Fettalkoholen oder Fettsäureamiden), weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von 0,2 bis 10 Gew.-Teile, bevorzugt 0,5 bis 5 Gew.-Teile, bezogen auf 100 Gew.-Teile der hydrierten Nitrilkautschuke (a) eingesetzt.

Auch die Verstärkung der Vulkanisate mit Festigkeitsträgern aus Glas nach der Lehre von US-A-4,826,721 ist möglich sowie die Verstärkung mit aromatischen Polyamiden (Aramid).

In einer **offenbarten Ausführungsform** wird eine vulkanisierbare Zusammensetzung bereitgestellt, dadurch gekennzeichnet, dass die vulkanisierbare Zusammensetzung
(a) 100 Gew.-Teile mindestens hydrierten Nitrilkautschuks,
(b) mehr als 20 bis weniger als 150 Gew.-Teile eines wärmeleitfähigen Füllstoffes ausgewählt aus der Gruppe bestehend aus synthetischem Graphit und Aluminiumoxid,
(c) 1 bis 20 Gew.-Teile, bevorzugt 2 bis 10 Gew.-Teile mindestens einer Peroxidverbindung,
(d) 0 bis 100 Gew.-Teile, bevorzugt 1 bis 80 Gew.-Teile eines oder mehrerer üblicher Kautschukadditive enthält.

Eine **besonders bevorzugte Ausführungsform** sind vulkanisierbare Zusammensetzungen, enthaltend
(a) 100 Gew.-Teile mindestens eines hydrierten Nitrilkautschukes,
(b) 40 bis 100 Gew.-Teile eines synthetischen Graphits, oder 150 bis 270 Gew.-Teile Aluminiumoxid, und
(c) 2 bis 10 Gew.-Teile mindestens einer Peroxidverbindung.

Offenbart sind ferner **vulkanisierbare Zusammensetzungen** enthaltend
(a) 100 Gew.-Teile hydrierten Nitrilkautschuk,
(b) 80 bis 120 Gew.-Teile eines synthetischen Graphits,
(c) 2 bis 10 Gew.-Teile mindestens einer Peroxidverbindung.

**Gegenstand der Erfindung** ist ferner ein **Verfahren zur Herstellung** der vorgenannten erfindungsgemäßen vulkanisierbaren Zusammensetzungen, indem man alle Komponenten (a), (b) und (c) sowie gegebenenfalls (d) mischt. Dies kann unter Einsatz von dem Fachmann bekannten Vorrichtungen und Mischapparaturen erfolgen.

Die Reihenfolge, in der die Komponenten miteinander gemischt werden, ist nicht von grundlegender Bedeutung, sondern wird jeweils abgestimmt auf die zur Verfügung stehenden Mischaggregate und Temperaturführung.

Die Mischung der Komponenten (a), (b) und (c) und gegebenenfalls (d) kann dabei, je nach Temperatur, unter Verwendung der typischen, in der Kautschukindustrie gängigen Mischsystemen erfolgen. Einsatzbar sind i) diskontinuierlich mischende Aggregate in Form von Mischwalzen oder Innenmischern sowie ii) kontinuierlich mischende Aggregate wie Mischextruder.

Besonders bewährt hat es sich, die Mischung der Komponenten (a), (b) und (c) sowie gegebenenfalls (d) bei einer vorgegebenen Mischertemperatur im Bereich von ca. 30 bis 40 °C durchzuführen, da hier mit den oben genannten, in der kautschukverarbeitenden Industrie gängigen Mischaggregaten genügend hohe Scherkräfte appliziert können, um eine gute Durchmischung zu erreichen.

Bevorzugt wird der hydrierte Nitrilkautschuk (a) vorgelegt, mastiziert, und danach alle weiteren Komponenten bis auf die Vulkanisationschemikalien (Peroxidverbindung und Coagens) hinzugefügt. Nach angemessener Mischzeit wird die Mischung ausgeworfen.

Die Peroxidverbindung und das Coagens wird in einem zweiten Schritt auf einer Walze eingemischt. Die Drehzahl der Walze wird dabei so gesteuert, dass stabile Felle erhalten werden.

In der Praxis erhält man nach dem Mischen der erfindungsgemäßen Komponenten die vulkanisierbaren Zusammensetzungen z.B. in Form sogenannter "Felle", Fütterstreifen oder Fütterkörper, oder auch als Pellets oder Granulate. Dies können anschließend in Formen gepresst oder spritzgegossen werden und werden entsprechend den eingesetzten Radikalspendern bei geeigneten Bedingungen vernetzt.

**Gegenstand der Erfindung** ist ferner die **Herstellung von Vulkanisaten**, indem man die zuvor genannten vulkanisierbare Zusammensetzungen der einem Energieeintrag, insbesondere einer Temperaturbehandlung, unterwirft.

Der Energieeintrag kann beispielsweise in Form von thermischer Energie erfolgen. Die Herstellung der vulkanisierten Erzeugnissen mittels Temperaturbehandlung wird durchgeführt, indem man die erfindungsgemäßen vulkanisierbaren Zusammensetzungen in üblicher Weise in geeigneten Formwerkzeugen einer Temperatur im Bereich von bevorzugt 120 bis 200 °C, besonders bevorzugt von 140 bis 180 °C aussetzt. Die Vulkanisation kann mit Hilfe eines beliebigen Verfahrens, wie Pressvulkanisieren, Dampfvulkanisieren und dergleichen, bewirkt werden.

Im Rahmen der Vernetzung der erfindungsgemäßen vulkanisierbaren Zusammensetzung führen die Peroxidverbindungen (c) zu einer radikalischen Vernetzung zwischen und mit den eingesetzten hydrierten Nitrilkautschuken (a).

**Gegenstand der Erfindung** sind ferner auch **Vulkanisate, d.h. vernetzte Kautschuke**, die durch Vernetzung (Vulkanisation) der zuvor genannten vulkanisierbaren Zusammensetzungen durch Energieeintrag, insbesondere durchTemperaturbehandlung, erhältlich sind.

**Gegenstand der Erfindung** sind ferner auch **Bauteile** umfassend ein Vulkanisat, hergestellt aus einer erfindungsgemäßen vulkanisierbaren Zusammensetzung.

Bevorzugt handelt es sich bei diesen Bauteilen um **Dichtungen, Riemen** und **Schläuche.**

Die durch das Vulkanisieren der vulkanisierbaren Zusammensetzung erhaltenen Vulkanisate können durch ein übliches Verfahren zu einem Riemen, einer Dichtung, einem Schlauch oder dergleichen verarbeitet werden, und diese Produkte sind besonders ausgezeichnete Produkte mit den vorstehend beschriebenen Eigenschaften. Insbesondere weisen solche Vulkanisate eine hohe Wärmeleitfähigkeit von 2,0 W/m*K oder mehr auf.

Gegenstand der Erfindung ist somit ferner die **Verwendung** von 40 bis 120 Gew.-Teile synthetischer Graphit, bevorzugt TRIMEX C-Therm™ 001, bezogen auf 100 Gew.-Teile der hydrierten Nitrilkautschuke (a) in einer vulkanisierbaren Zusammensetzung enthaltend mindestens einen hydrierten Nitrilkautschuk (a) und mindestens eine Peroxidverbindung (c) **zur Erhöhung der Wärmeleitfähigkeit** von Vulkanisaten auf 2,0 W/m*K oder mehr und unter **Beibehaltung einer Mooney-Viskosität** von weniger als 155 ME.

Die prinzipielle Herstellung derartiger Dichtungen und Schläuche ist dem Fachmann bekannt. Für die Herstellung von Riemen kann der Fachmann unter Einsatz der erfindungsgemäßen vulkanisierbaren Zusammensetzungen beispielsweise analog zur Offenbarung der US-A-4,715,607 verfahren.

### Beispiele:

### Herstellung. Vulkanisation und Charakterisierung der Zusammensetzungen

Bei den Beispielen C bis H handelt es sich um erfindungsgemäße Beispiele. Bei den nachfolgenden Beispielen A* und B* sowie I* bis K* handelt es sich um nicht erfindungsgemäße Vergleichsbeispiele Die Vergleichsbeispiele sind in den folgenden Tabellen mit einem * hinter der Beispielsnummer gekennzeichnet.

Als primäres Mischaggregat wurde ein Innenmischer vom Typ GK 1,5 E (Hersteller: HF Mixing Group) eingesetzt. Die Drehzahl betrug 40 min⁻¹, die Kühlwassereintrittstemperatur 40 °C. Hierbei wurde der hydrierte Nitrilkautschuk (a) vorgelegt 1 Minute mastiziert, danach alle weiteren Komponenten bis auf die Vulkanisationschemikalien (Peroxidverbindung und Coagens) hinzugefügt. 3 Minuten nach Mischungsbeginn wurde der Stempel gezogen und gefegt. Nach 250 Sekunden Mischzeit wurde die Mischung ausgeworfen.

Die Peroxidverbindung und das Coagens wurde in einem zweiten Schritt bei ca. 30 °C auf der Walze eingemischt. (Hersteller Tröster, Walzendurchmesser 20 cm). Die Friktion betrug 1 : 1,11. Die Drehzahl der Walze wurde dabei so gesteuert, dass stabile Felle erhalten wurden. Nachfolgend wurde in Plattenpressen eine Vulkanisation dieser Felle bei 180 °C für 15 min vorgenommen.

### Eingesetzte Komponenten:

| | |
|---|---|
| **Therban^{®} 3627** | teilhydrierter Nitrilkautschuk, ACN-Gehalt: 36 Gew.-%, Mooney Viskosität ML 1+4 @100°C: 66 ME, Restdoppelbindungsgehalt: max. 2 %, erhältlich bei ARLANXEO |
| **Therban^{®} 3407** | hydrierter Nitrilkautschuk, ACN-Gehalt: 34 Gew.-%, Mooney Viskosität ML 1+4 @100°C: 70 ME, Restdoppelbindungsgehalt: max. 0,9%. erhältlich bei ARLANXEO |
| **Therban^{®} 3443 VP** | teilhydrierter Nitrilkautschuk, ACN-Gehalt: 34 Gew.-%, Mooney Viskosität ML 1+4 @100°C: 39 ME, Restdoppelbindungsgehalt: max. 4 %. erhältlich bei ARLANXEO |
| **Therban^{®} 3668 VP** | teilhydrierter Nitrilkautschuk, ACN-Gehalt: 36 Gew.-%, Mooney Viskosität ML 1+4 @100°C: 80 ME, Restdoppelbindungsgehalt: max. 6 %; erhältlich bei ARLANXEO |
| **Therban^{®} XT VP KA 8889** | hydrierter carboxylierter Nitrilkautschuk (Terpolymer), ACN-Gehalt: 33 Gew.-%, Mooney Viskosität ML 1+4 @100°C: 77 ME, Restdoppelbindungsgehalt: 3,5 %; erhältlich bei ARLANXEO |
| **Corax^{®} N 550** | ASTM-Ruß; erhältlich bei Orion Engineered Carbon |
| **Corax^{®} N 220** | ASTM-Ruß; erhältlich bei Orion Engineered Carbon |
| **Corax^{®} N 990** | MT Ruß, erhältlich bei Orion Engineered Carbon |
| **Vulkasil^{®} A1** | Natrium-Aluminiumsilikat, erhätlich bei der Rheinchemie Rheinau GmbH |
| **Silatherm^{®} 1360-8** | Alumosilikat, erhältich bei HPF Quarzwerke GmbH |
| **Bornitrid CFA 50** | Bornitrid, erhältlich bei 3M Deutschland GmbH |
| **TIMREX^{®} C-Therm 001** | synthetischer Graphit; D₉₀ = 81 µm (gemäß DIN 51938), Asche <0,3% (gemäß ASTM C561-16), erhältich bei Imerys CAS-Nummer: 7782-42-5 |
| **Martoxid TM-2410** | alkyls ilanbesch ichtetes oberflächenbesch ichtetes Aluminiumoxid; Reinheit > 99%, BET = 1,2m²/g, Rütteldichte = 1,8 g/cm³; erhältlich bei Martinswerk (Huber) CAS-Nummer: 1344-28-1 |
| **Martoxid TM-1410** | unbeschichtetes Aluminiumoxid; Reinheit > 99%, BET = 1,2 m²/g, Rütteldichte = 1,8 g/cm³; erhältlich bei Martinswerk (Huber) CAS-Nummer: 1344-28-1 |
| **Silquest^{®} RC-1 Silane** | organisches Silanisierungsmittel, erhältlich von Momentive Performance Materials, Inc., |
| **Dynasylan^{®} 6490** | oligomeres Siloxan, erhältich von Evonik Industries |
| **Dymalink^{®} 633** | Zinkdiacrylat, erhältlich von Cray Valley |
| **Mistron^{®} R10 C** | Talk, erhältlich von Imerys |
| **Maglite^{®} DE** | Magnesiumoxid, erhältlich von CP Hall |
| **Vulkanox^{®} HS** | 2,2,4-Trimethyl-1,2-dihydroquinolin, polymerisiert, erhältlich von der Lanxess Deutschland GmbH |
| **Luvomaxx^{®} CDPA** | 4,4'-Bis-(1,1-dimethylbenzyl)-diphenylamin, erhältlich von Lehmann und Voss |
| **Vulkanox^{®} MB2** | 4- und 5-Methyl-2-mercapto-benzimidazol; erhältlich von der Lanxess Deutschland GmbH |
| **Aflux^{®} 18** | primäres Fettamin, erhältlich von der Rheinchemie Rheinau GmbH |
| **Rhenofit^{®} TRIM/S** | 70 % Trimethylolpropantrimethacrylat auf 30 % Silica; Coagens; erhältlich von der Rhein Chemie Rheinau GmbH |
| **Perkadox^{®} 14-40** | Di(tert.-butylperoxyisopropyl)benzol 40% geträgert auf Kieselsäure; erhältlich von Akzo Nobel Polymer Chemicals BV |

Die Mengenangebe der Gewichtsteile in den Beispielen bezieht sich auf 100 Gewichtsteile des hydrierten Nitrilkautschuks (a).

Die Messung der **Mooney―Viskosität** erfolgt nach DIN 53523/3 bzw. ASTM D 1646 bei 100 °C für die HNBR enthaltenden Mischungen.

Die **Härte** nach Shore A wurde nach ASTM-D2240-81 gemessen.

Die Messung der **Bruchdehnung** und der **Zugfestigkeit** der Vulkanisate erfolgt an S2-Stäben nach DIN 53504 bei Raumtemperatur.

Die Messung der **Wärmeleitfähigkeit** erfolgt mittels eines stationären Verfahrens. Dabei wird ein 2 mm dicker Prüfkörper bei Raumtemperatur in Kontakt mit einer Wärmequelle und einem Temperaturfühler gehalten, bis sich ein Gleichgewicht des Wärmeflusses im Prüfkörper einstellt. Die Messung erfolgt dann mittels eines Gerätes DTC 300 von TA instruments. Die Wärmeleitfähigkeit wird anschließend aus dem Kalibrierfaktor, der Probenkörperdicke und dem Temperaturabfall über dem Prüfkörper berechnet.

**Tabelle 1: Vulkanisierbaren Zusammensetzungen (Beispiele mit einem * sind nicht erfindungsgemäße Vergleichsversuche)**

| **Beispiele** | | **C*** | **D*** | **E*** | **F*** | **G** | **H** |
|---|---|---|---|---|---|---|---|
| | | **[Gew.-Teile]** | | | | | |
| **Therban^{®} AT 3443 VP** | | 100 | 100 | 100 | 100 | 100 | 100 |
| **Corax^{®} N 550** | | 5 | 5 | 5 | 5 | | 5 |
| **Corax^{®} N 220** | | | | | | 30 | |
| **TIMREX^{®} C-Therm 001** | | 40 | 80 | 120 | 150 | | |
| **Martoxid^{®} TM-2410** | | | | | | 150 | 270 |
| **Dynasylan^{®} 6490** | | 1 | 1 | 1 | | | |
| **Maglite^{®} DE** | | 3 | 3 | 3 | 3 | 3 | 3 |
| **Vulkanox^{®}HS** | | 1,1 | 1,1 | 1,1 | 1,1 | 1,1 | 1,1 |
| **Vulkanox^{®} MB2** | | 0,3 | 0,3 | 0,3 | 0,3 | 0,3 | 0,3 |
| **Aflux^{®} 18** | | 1 | 1 | 1 | 1 | 1 | 1 |
| **Rhenofit^{®} TRIM/S** | | 2 | 2 | 2 | 2 | 2 | 2 |
| **Perkadox^{®} 14-40** | | 5 | 5 | 5 | 5 | 5 | 5 |
| | | | | | | | |

| **EIGENSCHAFTEN** | | **C*** | **D*** | **E*** | **F*** | **G** | **H** |
|---|---|---|---|---|---|---|---|
| **ML 1+4** | ME | 69,3 | 117,1 | 151,4 | n.b. | 58,6 | 97,7 |
| **Härte** | [ShA] | 77 | 87 | 92 | 93 | 60 | 72 |
| **Bruchdehnung** | [%] | 423 | 100 | 36 | 23 | 536 | 528 |
| **Zugfestigkeit** | [MPa] | 9 | 10,1 | 16 | 15,7 | 12 | 8,6 |
| **Wärmeleitfähigkeit** | [W/m*K] | 2,06 | 3,68 | 4,44 | 3,84 | 2,0 | 3,32 |
| **Blasenbildung beim Heizen** | | j | j | j | j | n | n |

| | | | | | | | |
|---|---|---|---|---|---|---|---|
| ME (=Mooney Einheiten); n = nein; j = ja; n.b. = nicht bestimmt (>155,0 ME) | | | | | | | |

Die Versuche zeigen, dass die Vulkanisate C bis E und G bis H eine hohe **Wärmeleitfähigkeit** von 2,00 bis 4,44 W/m*K aufweisen.

Vulkanisate C*, D*, E* und F* die nur synthetischen Grafit (TIMREX^{®} C-THERM 001) als wärmeleitfähigen Füllstoff enthalten, weisen **Blasenbildung** auf. Vulkanisate mit Aluminiumoxid (Martoxid^{®} TM-2410) weisen hingegen keine Blasenbildung auf und sind somit bevorzugt.

Die **Mooney** Viskosität (ML 1+4) der vulkanisierbaren Zusammensetzung nimmt mit zunehmender Menge an TIMREX^{®} C-THERM 001 zu. Vulkanisierbare Zusammensetzungen mit Aluminiumoxid weisen hingegen eine niedrigere Mooney Viskosität auf als vulkanisierbare Zusammensetzungen mit der gleichen Menge an TIMREX^{®} C-THERM 001. Eine niedrigere Mooney Viskosität bewirkt eine bessere Verarbeitbarkeit der vulkanisierbaren Zusammensetzungen. Zusammensetzungen mit 150 Gew.-Teilen TIMREX^{®} C-Therm 001 weisen einen zu hohen Mooney Wert auf.

Die **Bruchdehnung** nimmt mit zunehmender Menge an Timrex C-THERM 001 ab. Vulkanisate mit hohen Mengen an Aluminiumoxid weisen hingegen eine hohe und somit bevorzugte Bruchdehnung auf.

**Tabelle 2: Vulkanisierbare Zusammensetzungen (Vergleich)**

| **Beispiele** | | **A*** | **B*** | **I*** | **J*** | **K*** |
|---|---|---|---|---|---|---|
| | | **[Gew.-Teile]** | | | | |
| **Therban^{®} 3443 VP** | | 100 | 100 | | | |
| **Therban^{®} 3407** | | | | 100 | | |
| **Therban^{®} 3627** | | | | | 100 | 100 |
| **Corax^{®} N 550** | | 5 | 5 | | 15 | 15 |
| **Corax^{®} N 990** | | | | 65 | | |
| **Vulkasil^{®} A1** | | | | 5 | | 5 |
| **TIMREX^{®} C-Therm 001** | | | 20 | | | |
| **Mistron^{®} R10 C** | | | | 15 | | |
| **Bornitrid CFA 50** | | | | | 80 | |
| **Silatherm^{®} 1360-8** | | | | | | 80 |
| **Silquest^{®} RC-1 Silane** | | | | 0,5 | 1 | 1 |
| **Dymalink^{®} 633** | | | | 8 | | |
| **Maglite^{®} DE** | | 3 | 3 | 4 | 3 | 3 |
| **Vulkanox^{®} HS** | | 1,1 | 1,1 | | | |
| **Luvomaxx^{®} CDPA** | | | | 1,5 | 1,5 | 1,5 |
| **Vulkanox^{®} MB2** | | 0,3 | 0,3 | 0,3 | 0,3 | 0,3 |
| **Aflux^{®} 18** | | 1 | 1 | | | |
| **Rhenofit^{®} TRIM/S** | | 2 | 2 | 2,5 | 2 | 2 |
| **Perkadox^{®} 14-40** | | 5 | 5 | 8 | 8 | 8 |
| | | | | | | |

| **EIGENSCHAFTEN** | | **A*** | **B*** | **I*** | **J*** | **K*** |
|---|---|---|---|---|---|---|
| **ML 1+4** | ME | 39,1 | 55,5 | n.b. | n.b. | n.b. |
| **Härte** | [ShA] | 47 | 65 | 78 | 82 | 69 |
| **Bruchdehnung** | [%] | 557 | 541 | 197 | 305 | 265 |
| **Zuqfestiqkeit** | [MPa] | 24,3 | 15,3 | 18,3 | 14 | 13,5 |
| **Wärmeleitfähigkeit** | [W/m*K] | 0,88 | 1,6 | 0,5 | 1,25 | 0,49 |
| **Blasenbildung beim Heizen** | | n | j | j | j | n |

| | | | | | | |
|---|---|---|---|---|---|---|
| ME (=Mooney Einheiten); n = nein; j = ja; n.b. = nicht bestimmt (>155 ME) | | | | | | |

Die vulkanisierbaren Zusammensetzungen der Beispiele A* und B* sowie I* bis K* dienen als Vergleichsversuch zu den erfindungsgemäßen Beispielen, da diese kein Aluminiumoxid (Martoxid^{®} TM-2410) enthalten.

Die Vergleichsbeispiele zeigen, dass Vulkanisate A* und B* sowie I* bis K* eine niedrige **Wärmeleitfähigkeit** von nur 0,44 bis 1,6 W/m*K aufweisen.

Die Beispielsserie zeigt weiterhin, dass die erfindungsgemäßen Vulkanisate C bis E und G bis H eine **bessere Verarbeitbarkeit** aufweisen als die Vergleichsbeispiele A* und B* sowie I* bis L*.

**Tabelle 3: Vulkanisierbare Zusammensetzungen**

| **Beispiele** | | **L** | **M** | **N** | **10** | **P** |
|---|---|---|---|---|---|---|
| | | **[Gew.-Teile]** | | | | |
| **Therban^{®} 3443 VP** | | 100 | 70 | 100 | 100 | 100 |
| **Therban^{®} XT VP KA 8889** | | | 30 | | | |
| **Corax^{®} N 220** | | 20 | 20 | 20 | 20 | 20 |
| **TIMREX^{®} C-Therm 001** | | 60 | 60 | 60 | 60 | 60 |
| **Martoxid^{®} TM-2410** | | 200 | 200 | | | |
| **Martoxid^{®} TM-1410** | | | | 200 | 200 | 200 |
| **Silquest^{®} RC-1 Silane** | | | | | 5 | |
| **Vulkasil^{®} N** | | | | | | 20 |
| **Maglite^{®} DE** | | 3 | | 3 | 3 | 3 |
| **Aflux^{®} 18** | | 1 | 1 | 1 | 1 | 1 |
| **Rhenofit^{®} TRIM/S** | | 2 | 2 | 2 | 2 | 2 |
| **Perkadox^{®} 14-40** | | 9 | 9 | 9 | 9 | 9 |
| | | | | | | |

| **EIGENSCHAFTEN** | | **L** | **M** | **N** | **O** | **P** |
|---|---|---|---|---|---|---|
| **ML 1+4** | ME | 120,68 | 117,12 | 137,64 | 115,7 | 139,51 |
| **Härte** | [ShA] | 94 | 94 | 93 | 94 | 95 |
| **Bruchdehnung** | [%] | 72 | 59 | 51 | 40 | 51 |
| **Zuqfestiqkeit** | [MPa] | 15,4 | 15,5 | 13,9 | 19 | 13,8 |
| **Wärmeleitfähigkeit** | [W/m*K] | 5,0 | 4,8 | 5,3 | 4,7 | 5,3 |

| | | | | | | |
|---|---|---|---|---|---|---|
| ME (=Mooney Einheiten) | | | | | | |

Die Beispiele L, M, N, O und P weisen 100 Gew.-Teile hydrierten Nitrilkautschuk (Therban^{®} 3443 VP; Therban^{®} XT VP KA 8889), 60 Teile synthetisches Graphit (TIMREX^{®} C-Therm 001) und 200 Gew.-Teile Aluminiumoxid (Martoxid^{®} TM-2410; Martoxid^{®} TM-1410) auf.

Die Versuche zeigen, dass die erfindungsgemäßen Vulkanisate L bis P alle eine hohe **Wärmeleitfähigkeit** über 4,5 W/m*K aufweisen

In-situ Silanisierung (Beispiel O) führt zu einer verbesserten Zugfestigkeit.

Das Beispiel N mit nicht-funktionalisiertem Aluminiumoxid (Martoxid^{®} TM-1410) weist eine leicht verbesserte Wärmeleitfähigkeit auf als das Beispiel L mit funktionalisiertem Aluminiumioxid (Martoxid^{®} TM-2410).

## Patentansprüche

1. **Vulkanisierbare Zusammensetzungen**, **dadurch gekennzeichnet, dass** sie
(a) 100 Gew.-Teile mindestens eines hydrierten Nitrilkautschuks,
(b) 150 bis 300 Gew.-Teile mindestens eines Aluminiumoxids und
(c) mindestens ein Vernetzungmittel, bevorzugt eine Peroxidverbindung, ein aminisches Vernetzungsmittel oder ein schwefelhatiges Venetzungsmittel,
enthalten.

2. **Vulkanisierbare Zusammensetzungen** nach Anspruch 1, **dadurch gekennzeichnet, dass** sie
(a) 100 Gew.-Teile mindestens eines hydrierten Nitrilkautschuks,
(b) 20 bis 100 Gew.-Teile mindestens eines synthetischen Graphits und 150 bis 300 Gew.-Teile mindestens eines Aluminiumoxids und
(c) mindestens ein Vernetzungmittel, bevorzugt eine Peroxidverbindung, ein aminisches Vernetzungsmittel oder ein schwefelhatiges Venetzungsmittel,
enthalten.

3. Vulkanisierbare Zusammensetzung nach Anspruch 1 oder 2, **dadurch gekennzeichnet, dass** der mindestens eine hydrierte Nitrilkautschuk (a) ein Co- oder Terpolymere enthaltend mindestens ein konjugiertes **Dien** und mindestens ein α,β-ungesättigtes **Nitrilmonomer** sowie gegebenenfalls weitere copolymerisierbarere Monomere ist, bei denen die einpolymerisierten Dieneinheiten **ganz oder teilweise hydriert** sind.

4. Vulkanisierbare Zusammensetzung nach einem der Ansprüche 1 bis 3, **dadurch gekennzeichnet, dass** der synthetische Graphit (b) einen **D₉₀-Wert** gemäß DIN 51938 von 70 µm oder mehr, bevorzugt 80 µm oder mehr und besonders bevorzugt 81 µm aufweist.

5. Vulkanisierbare Zusammensetzung nach einem der Ansprüche 1 bis 4, **dadurch gekennzeichnet, dass** der synthetische Graphit (b) einen **Aschegehalt** gemäß ASTM C561-16 von <0,5 %, bevorzugt <0,3 % aufweist.

6. Vulkanisierbare Zusammensetzung nach einem der Ansprüche 1 bis 5, **dadurch gekennzeichnet, dass** der synthetische Graphit (b) eine **Dichte** (Scott-Density gemessen als Bulk Density mittels Scott Volumeter) von 0,01 bis 1 g/cm³, bevorzugt von 0,1 bis 0,2 g/cm³ aufweist.

7. Vulkanisierbare Zusammensetzung nach einem der Ansprüche 1 bis 6, **dadurch gekennzeichnet, dass** der synthetische Graphit (b) einen D₉₀-Wert gemäß DIN 51938von 81 µm, einen Aschegehalt gemäß ASTM C561-16 von <0,3 % und eine Dichte (bulk density) von 0,15 g/cm³ aufweist.

8. Vulkanisierbare Zusammensetzung nach einem der Ansprüche 1 bis 7, **dadurch gekennzeichnet, dass** das Aluminiumoxid (b) beschichtet oder unbeschichtete ist und eine Reinheit von >95%, einen BET-Gehalt von 0,8 bis 1,6 m²/g (gemessen nach DIN ISO 9277:2003-05 und eine Rütteldichte von 1 bis 3 g/cm³ aufweist.

9. Vulkanisierbare Zusammensetzung nach einem der Ansprüche 1 bis 8, **dadurch gekennzeichnet, dass** das Aluminiumoxid (b) beschichtet ist, bevorzugt mit einem Alkylsilan beschichtet ist.

10. Vulkanisierbare Zusammensetzung nach einem der Ansprüche 1 bis 9, **dadurch gekennzeichnet, dass** das mindestens eine **Vernetzungsmittel (c)** ein organisches Peroxid, bevorzugt Dicumylperoxid, t-Butylcumylperoxid, Bis-(t-butyl-peroxy-isopropyl)benzol, Di-t-butylperoxid, 2,5-Dimethylhexan-2,5-dihydroperoxid, 2,5-Dimethylhexin-3,2,5-di-hydroperoxid, Dibenzoylperoxid, Bis-(2,4-dichlorobenzoyl)peroxid, t-Butylperbenzoat, 4,4-Di(t-butylperoxy)valeriansäurebutylester oder 1,1-Bis(t-butylperoxy)-3,3,5-trimethylcyclohexan ist.

11. Vulkanisierbare Zusammensetzung nach einem der Ansprüche 1 bis 10, **dadurch gekennzeichnet, dass** die **Menge an Vernetzungsmitel (c)** 1 bis 20 Gew.-Teile, bevorzugt 2 bis 10 Gew.-Teile, bezogen auf 100 Gew.-Teile der Kautschuke (a), beträgt.

12. Vulkanisierbare Zusammensetzung nach einem der Ansprüche 1 bis 11, **dadurch gekennzeichnet, dass** die Zusammensetzung
(a) 100 Gew.-Teile hydrierten Nitrilkautschuk,
(b) 20 bis 100 Gew.-Teile mindestens eines synthetischem Graphits, und 150 bis 300 Gew.-Teile eines Aluminiumoxids,
(c) 1 bis 20 Gew.-Teile, bevorzugt 2 bis 10 Gew.-Teile mindestens eines Vernetzungsmittels, bevorzugt einer Peroxidverbindung,
(d) 0 bis 100 Gew.-Teile, bevorzugt 1 bis 80 Gew.-Teile eines oder mehrerer üblicher Kautschukadditive, bevorzugt eines oder mehrerer Füllstoffe, insbesondere Ruß, Kieselsäure, Magnesiumoxid, eines oder mehrerer Füllstoffaktivatoren, insbesondere auf Basis eines organischen Silans, eines oder mehrerer Alterungsschutzmittel, insbesondere oligomerisiertes 2,2,4-Trimethyl-1,2-dihydro-chinolin (TMQ), styrolisiertes Diphenylamin (DDA), octyliertes Diphenylamin (OCD), cumyliertes Diphenylamin (CDPA) oder Zinksalz von 4- und 5-Methylmercaptobenzimidazol (Vulkanox ZMB2) oder 4- und 5-Methylmercaptobenzimidazol und/oder eines oder mehrerer Formtrennmittel oder Verarbeitungshilfsmittel bezogen auf 100 Gew.-Teile der hydrierten Nitrilkautschuks (a),
enthält.

13. **Vulkanisate,** die durch Vulkanisation der vulkanisierbaren Zusammensetzungen nach einem der Ansprüche 1 bis 12 durch Energieeintrag, insbesondere durch Temperaturbehandlung, erhältlich sind.

14. **Bauteil** umfassend ein Vulkanisat nach Anspruch 13, bevorzugt **Dichtungen, Riemen** oder **Schläuche.**

## Claims

1. **Vulcanizable compositions, characterized in that** they comprise
(a) 100 parts by weight of at least one hydrogenated nitrile rubber,
(b) 150 to 300 parts by weight of at least one aluminium oxide and
(c) at least one crosslinking agent, preferably a peroxide compound, an aminic crosslinking agent or a sulfur-containing crosslinking agent.

2. **Vulcanizable compositions** according to Claim 1, **characterized in that** they comprise
(a) 100 parts by weight of at least one hydrogenated nitrile rubber,
(b) 20 to 100 parts by weight of at least one synthetic graphite, and
150 to 300 parts by weight of at least one aluminium oxide and
(c) at least one crosslinking agent, preferably a peroxide compound, an aminic crosslinking agent or a sulfur-containing crosslinking agent.

3. Vulcanizable composition according to Claim 1 or 2, **characterized in that** the at least one hydrogenated nitrile rubber (a) is a co- or terpolymer containing at least one conjugated **diene** and at least one α,β-unsaturated **nitrile monomer** and optionally further copolymerizable monomers, in which the copolymerized diene units have been **wholly or partly hydrogenated.**

4. Vulcanizable composition according to any of Claims 1 to 3, **characterized in that** the synthetic graphite (b) has a **D₉₀** according to DIN 51938 of 70 µm or more, preferably 80 µm or more and more preferably 81 µm.

5. Vulcanizable composition according to any of Claims 1 to 4, **characterized in that** the synthetic graphite (b) has an **ash content** to ASTM C561-16 of < 0.5%, preferably < 0.3%.

6. Vulcanizable composition according to any of Claims 1 to 5, **characterized in that** the synthetic graphite (b) has a **density** (Scott density measured as bulk density by means of a Scott volumeter) of 0.01 to 1 g/cm³, preferably of 0.1 to 0.2 g/cm³.

7. Vulcanizable composition according to any of Claims 1 to 6, **characterized in that** the synthetic graphite (b) has a D₉₀ to DIN 51938 of 81 µm, an ash content to ASTM C561-16 of < 0.3% and a (bulk) density of 0.15 g/cm³.

8. Vulcanizable composition according to any of Claims 1 to 7, **characterized in that** the aluminium oxide (b) is coated or uncoated and has a purity of > 95%, a BET content of 0.8 to 1.6 m²/g (measured to DIN ISO 9277:2003-05) and a tamped density of 1 to 3 g/cm³.

9. Vulcanizable composition according to any of Claims 1 to 8, **characterized in that** the aluminium oxide (b) is coated, preferably coated with an alkylsilane.

10. Vulcanizable composition according to any of Claims 1 to 9, **characterized in that** the at least one **crosslinking agent (c)** is an organic peroxide, preferably dicumyl peroxide, t-butyl cumyl peroxide, bis(t-butylperoxyisopropyl)benzene, di-t-butyl peroxide, 2,5-dimethylhexane 2,5-dihydroperoxide, 2,5-dimethylhex-3-yne 2,5-dihydroperoxide, dibenzoyl peroxide, bis(2,4-dichlorobenzoyl) peroxide, t-butyl perbenzoate, butyl 4,4-di(t-butylperoxy)valerate or 1,1-bis(t-butylperoxy)-3,3,5-trimethylcyclohexane.

11. Vulcanizable composition according to any of Claims 1 to 10, **characterized in that** the **amount of crosslinking agent (c)** is 1 to 20 parts by weight, preferably 2 to 10 parts by weight, based on 100 parts by weight of the rubbers (a).

12. Vulcanizable composition according to any of Claims 1 to 11, **characterized in that** the composition contains
(a) 100 parts by weight of hydrogenated nitrile rubber,
(b) 20 to 100 parts by weight of at least one synthetic graphite, and
150 to 300 parts by weight of an aluminium oxide,
(c) 1 to 20 parts by weight, preferably 2 to 10 parts by weight, of at least one crosslinking agent, preferably a peroxide compound,
(d) 0 to 100 parts by weight, preferably 1 to 80 parts by weight, of one or more customary rubber additives, preferably one or more fillers, especially carbon black, silica, magnesium oxide, one or more filler-activators, especially based on an organic silane, one or more ageing stabilizers, especially oligomerized 2,2,4-trimethyl-1,2-dihydroquinoline (TMQ), styrenized diphenylamine (DDA), octylated diphenylamine (OCD), cumylated diphenylamine (CDPA) or zinc salt of 4- and 5-methylmercaptobenzimidazole (Vulkanox ZMB2) or 4- and 5-methylmercaptobenzimidazole and/or one or more mould release agents or processing aids, based on 100 parts by weight of the hydrogenated nitrile rubber (a).

13. **Vulcanizates** obtainable by vulcanization of the vulcanizable compositions according to any of Claims 1 to 12 by input of energy, especially by thermal treatment.

14. **Component** comprising a vulcanizate according to Claim 13, preferably **gaskets, belts** or **hoses.**

## Revendications

1. Compositions vulcanisables, **caractérisées en ce qu'**elles contiennent
(a) 100 parties en poids d'un caoutchouc de nitrile hydrogéné
(b) 150 à 300 parties en poids d'au moins un oxyde d'aluminium et
(c) au moins un réticulant, de préférence un composé peroxyde, un réticulant amine ou un réticulant contenant du soufre.

2. Compositions vulcanisables selon la revendication 1, **caractérisées en ce qu'**elles contiennent
(a) 100 parties en poids d'un caoutchouc de nitrile hydrogéné
(b) 20 à 100 parties en poids d'au moins un graphite synthétique et
150 à 300 parties en poids d'au moins un oxyde d'aluminium et
(c) au moins un réticulant, de préférence un composé peroxyde, un réticulant amine ou un réticulant contenant du soufre.

3. Composition vulcanisable selon la revendication 1 ou 2, **caractérisée en ce que** ledit au moins un caoutchouc de nitrile hydrogéné (a) est un copolymère ou un terpolymère contenant au moins un diène conjugué et au moins un monomère de nitrile α,β-insaturé ainsi que le cas échéant d'autres monomères copolymérisables, pour lequel les motifs diéniques copolymérisés sont totalement ou partiellement hydrogénés.

4. Composition vulcanisable selon l'une quelconque des revendications 1 à 3, **caractérisée en ce que** le graphite synthétique (b) présente une valeur D₉₀ selon la norme DIN 51938 de 70 µm ou plus, de préférence de 80 µm ou plus et de manière particulièrement préférée de 81 µm.

5. Composition vulcanisable selon l'une quelconque des revendications 1 à 4, **caractérisée en ce que** le graphite synthétique (b) présente une teneur en cendres selon la norme ASTM C561-16 < 0,5%, de préférence < 0,3%.

6. Composition vulcanisable selon l'une quelconque des revendications 1 à 5, **caractérisée en ce que** le graphite synthétique (b) présente une masse volumique (masse volumique de Scott mesurée en tant que masse volumique apparente au moyen d'un volumètre de Scott) de 0,01 à 1 g/cm³, de préférence de 0,1 à 0,2 g/cm³.

7. Composition vulcanisable selon l'une quelconque des revendications 1 à 6, **caractérisée en ce que** le graphite synthétique (b) présente une valeur D₉₀ selon la norme DIN 51938 de 81 µm, une teneur en cendres selon la norme ASTM C561-16 < 0,3% et une masse volumique (masse volumique apparente) de 0,015 g/cm³.

8. Composition vulcanisable selon l'une quelconque des revendications 1 à 7, **caractérisée en ce que** l'oxyde aluminium (b) est revêtu ou non revêtu et présente une pureté > 95%, une valeur BET 0,8 à 1,6 m²/g (mesurée selon la norme DIN ISO 9277:2003-05) et une masse volumique après tassement de 1 à 3 g/cm³.

9. Composition vulcanisable selon l'une quelconque des revendications 1 à 8, **caractérisée en ce que** l'oxyde aluminium (b) est revêtu, de préférence revêtu par un alkylsilane.

10. Composition vulcanisable selon l'une quelconque des revendications 1 à 9, **caractérisée en ce que** ledit au moins un réticulant (c) est un peroxyde organique, de préférence le peroxyde de dicumyle, le peroxyde de t-butylcumyle, le bis-(t-butylperoxyisopropyl)benzène, le peroxyde de di-t-butyle, le 2,5-diméthylhexane-2,5-dihydroperoxyde, le 2,5-diméthylhexyne-3,2,5-dihydroperoxyde, le peroxyde de dibenzoyle, le peroxyde de bis-(2,4-dichlorobenzoyle), le perbenzoate de t-butyle, l'ester butylique de l'acide 4,4-di(t-butylperoxy)valérianique ou le 1,1-bis(t-butylperoxy)-3,3,5-triméthylcyclohexane.

11. Composition vulcanisable selon l'une quelconque des revendications 1 à 10, **caractérisée en ce que** la quantité de réticulant (c) représente 1 à 20 parties en poids, de préférence 2 à 10 parties en poids, par rapport à 100 parties en poids du caoutchouc (a).

12. Composition vulcanisable selon l'une quelconque des revendications 1 à 11, **caractérisée en ce que** la composition contient
(a) 100 parties en poids de caoutchouc de nitrile hydrogéné,
(b) 20 à 100 parties en poids d'au moins un graphite synthétique et
150 à 300 parties en poids d'un oxyde d'aluminium,
(c) 1 à 20 parties en poids, de préférence 2 à 10 parties en poids, d'au moins un réticulant, de préférence d'un composé peroxyde,
(d) 0 à 100 parties en poids, de préférence 1 à 80 parties en poids d'un ou de plusieurs additifs usuels du caoutchouc, de préférence d'une ou de plusieurs charges, en particulier la suie, la silice, l'oxyde de magnésium, d'un ou de plusieurs activateurs de charges, en particulier à base d'un silane organique, d'un ou de plusieurs agents de protection contre le vieillissement, en particulier la 2,2,4-triméthyl-1,2-dihydroquinoléine oligomérisée (TMQ), la diphénylamine styrénisée (DDA), la diphénylamine octylée (OCD), la diphénylamine cumylée (CDPA) ou le sel zincique de 4-méthylmercaptobenzimidazole et de 5-méthylmercaptobenzimidazole (Vulkanox ZMB2) ou le 4-méthylmercaptobenzimidazole et le 5-méthylmercaptobenzimidazole et/ou d'un ou de plusieurs agents de démoulage ou d'adjuvants de mise en œuvre, par rapport à 100 parties en poids du caoutchouc de nitrile hydrogéné (a).

13. Produits vulcanisés, qui peuvent être obtenus par vulcanisation des compositions vulcanisables selon l'une quelconque des revendications 1 à 12 par apport d'énergie, en particulier par traitement thermique.

14. Pièce comprenant un produit vulcanisé selon la revendication 13, de préférence joints, courroies ou tuyaux.
